(19)

Europäisches Patentamt
European Patent Office
Office européen des brevets

(11)  **EP 4 206 357 A1**

(12)  **EUROPEAN PATENT APPLICATION**

(43) Date of publication:
**05.07.2023  Bulletin 2023/27**

(21) Application number: **22213492.6**

(22) Date of filing: **14.12.2022**

(51) International Patent Classification (IPC):
***C23C 18/16*** (2006.01)      ***C23C 18/44*** (2006.01)

(52) Cooperative Patent Classification (CPC):
**C23C 18/1617; C23C 18/44**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **28.12.2021   JP 2021214193**

(71) Applicant: **C. Uyemura & Co., Ltd.
Osaka-shi, Osaka 541-0045 (JP)**

(72) Inventors:
• **KANEKO, Yohei**
  **Osaka, 573-0065 (JP)**
• **TANABE, Katsuhisa**
  **Osaka, 573-0065 (JP)**
• **MAEDA, Tsuyoshi**
  **Osaka, 573-0065 (JP)**
• **NISHIMURA, Naoshi**
  **Osaka, 573-0065 (JP)**

(74) Representative: **advotec.
Patent- und Rechtsanwaltspartnerschaft
Tappe mbB
Widenmayerstraße 4
80538 München (DE)**

(54)  **REGENERATION METHOD FOR GOLD PLATING SOLUTION**

(57)    An objective of the present disclosure is to provide a plating solution regeneration method which can improve bath stability of a gold plating solution containing formaldehyde or its precursor as a reducing agent and can remove metal ions from the gold plating solution to prevent a decrease in the plating performance. A gold plating solution containing a gold cyanide salt, a reducing agent that is formaldehyde or its precursor, and an iron cyanide compound, and not containing a chelate compound having two or more iminodiacetic acid groups or aminomethylenephosphonic acid groups, is brought into contact with a chelating resin having an iminodiacetic acid group or an aminomethylenephosphonic acid group, thereby removing iron ions from the gold plating solution.

EP 4 206 357 A1

**Description**

BACKGROUND

The present disclosure relates to a regeneration method for a gold plating solution.

Gold has high electrical conductivity next to silver and copper, and is excellent in physical properties such as connectivity in thermocompression bonding, and in chemical properties such as oxidation resistance and chemical resistance. Thus, gold plating using gold is widely used as a final surface treatment method for circuits on printed circuit boards, mounting portions and terminal portions of IC packages, and the like in the field of the electronics industry.

The gold plating process includes, for example, applying gold plating to a surface of a plating object, such as a printed wiring board, by immersing the plating object in a gold plating bath and performing a reduction process. However, the gold plating solution used in the gold plating bath contains reducing agents and chelate compounds in addition to gold ions, and as the gold plating process is repeated, impurities, such as metal ions, accumulate and the plating performance, such as a plating rate, decreases.

Given these circumstances, as a measure therefor, a method is proposed in which a chelating resin is brought into contact with a gold plating solution. For example, a regeneration method for a gold plating solution has been proposed in which copper ions are removed by bringing a chelating resin having a coordinating group of iminodiacetic acid type into contact with a gold plating solution containing a gold salt, a reducing agent, an electric conducting salt, a complexing agent, and thallium (see, for example, Japanese Patent No. 3842063). Another regeneration process for a gold plating solution has also been proposed in which iron ions are removed by bringing a gold plating solution containing iron ions, a citric acid, at least one kind selected from cobalt ions and nickel ions, and a reducing agent, into contact with a chelating resin having a coordinating group of aminomethylenephosphonic acid type (see, for example, Japanese Patent No. 6795821).

SUMMARY

Since the known gold plating solutions described above contain a reducing agent, there has been a problem that the metals adhere to an object other than the plating object (for example, adheres to a container such as a plating tank in which the gold plating solution is stored), resulting in a decrease in the bath stability.

In particular, in recent years, gold plating solutions using formaldehyde or its precursor as a reducing agent have been proposed from the viewpoints of bath stability and deposition rate. With regard to the gold plating solutions containing formaldehyde or its precursor, a method for reducing a decrease in the bath stability and a decrease in the plating performance caused by the accumulation of impurities, such as metal ions mentioned above, has been long awaited.

In view of the above problem, an objective of the present disclosure is to provide a plating solution regeneration method which can improve bath stability of a gold plating solution containing formaldehyde or its precursor as a reducing agent and can remove metal ions from the gold plating solution to prevent a decrease in the plating performance.

To achieve the above objective, a regeneration method for a plating solution according to the present disclosure includes: bringing a gold plating solution containing a gold cyanide salt, a reducing agent that is formaldehyde or its precursor, and an iron cyanide compound, and not containing a chelate compound having two or more iminodiacetic acid groups or aminomethylenephosphonic acid groups, into contact with a chelating resin having an iminodiacetic acid group or an aminomethylenephosphonic acid group, thereby removing iron ions from the gold plating solution.

The present disclosure can improve the bath stability of a gold plating solution and remove iron ions from the gold plating solution, and can thus prevent a decrease in the plating performance.

DETAILED DESCRIPTION

Examples of a plating solution to which the regeneration method of the present disclosure is applied include a reduction-type gold plating solution for use in forming circuits on printed wiring boards, mounting portions and terminal portions of IC packages, and the like.

<Gold Plating Solution>

A reduction-type gold plating solution is a gold plating solution containing a gold cyanide salt as a gold source, formaldehyde or its precursor substance as a reducing agent, and an iron cyanide compound.

(Gold Cyanide Salt)

Examples of the gold cyanide salt include gold cyanide, potassium gold cyanide, sodium gold cyanide, and ammonium gold cyanide, but potassium gold cyanide and sodium gold cyanide are particularly preferred. These gold cyanide salts may be used alone or two or more kinds may be used in a mixture.

The concentration of the gold cyanide salt in the plating solution is preferably 0.02 g/L to 200 g/L, more preferably 0.2 g/L to 100 g/L, based on gold. The concentration below the above lower limit may decrease the deposition rate. The concentration exceeding the above upper limit may increase cost.

(Reducing Agent)

The reducing agent is used to reduce the gold cyanide salt, which is the gold source, and precipitates gold, and formaldehyde or its precursor is used as the reducing agent in the gold plating solution of the present disclosure. The "formaldehyde precursor" used herein refers to a compound that decomposes in an aqueous plating solution and thereby forms formaldehyde.

Examples of the formaldehyde precursor include acetal, hemiacetal, aminal, and N,O-acetal. More specifically, examples of the formaldehyde precursor include: hexamethylenetetramine; dimethylol glycol; sodium hydroxymethylglycinate; 1,3-bis(hydroxymethyl)5,5-dimethylimidazolidine-2,4-dione; 1,3,5,7-tetraazatricyclo-[3.3.1.13,7]decane; benzyl hemiformal; 2-bromo-2-nitropropane-1,3-diol; 5-bromo-5-nitro-1,3-dioxane; 1,3-bis(hydroxymethyl)-1-(1,3,4-tris(hydroxymethyl)-2,5-dioxoimidazolidin-4-yl)urea; 1,1'-methylene bis{3-[1-(hydroxymethyl)-2,5-dioxoimidazolidin-4-yl]urea} ; 3,5,7-triaza-1-azoniatricyclo-[3.3.1.13,7]-decan-1-(3-chloro-2-propenyl)-chloride; tetramethylolglycoluril; 1,3-bis(hydroxymethyl)2-imidazolidinone; 1,3-bis(hydroxymethyl)urea; 2,2,2-trichloroethane-1,1-diol; and 5,5-dimethyl-1,3-dioxane.

These reducing agents may be used alone or two or more kinds may be used in a mixture.

The concentration of the reducing agent in the plating solution is preferably 0.01 g/L to 100 g/L, more preferably 0.1 g/L to 10 g/L. The concentration below the above lower limit may decrease the deposition rate. The concentration exceeding the above upper limit may lower the bath stability and cause the bath decomposition.

(Iron Cyanide Compound)

The iron cyanide compound is used for improving the bath stability of the gold plating solution. Examples of the iron cyanide compound for use in the gold plating solution of the present disclosure include: pentacyanonitrosyl iron(III) acid or its salt (i.e., pentacyanonitrosylferrate(III)); pentacyanoammine iron(II) acid or its salt (i.e., pentacyanoammineferrate(II)); hexacyanido iron(II) acid or its salt (i.e., hexacyanidoferrate(II)); and hexacyanido iron(III) acid or its salt (i.e., hexacyanidoferrate(III)). Specific examples are potassium ferrocyanide (potassium hexacyanidoferrate(II)) and potassium ferricyanide (potassium hexacyanidoferrate(III)). These iron cyanide compounds may be used alone or two or more kinds may be used in a mixture.

In the present disclosure, a non-toxic iron cyanide compound is added to a reduction-type gold plating solution where formaldehyde or its precursor is used as a reducing agent, so that cyanohydrin is generated by the reaction between formaldehyde or its precursor and cyanide ions released from the iron cyanide compound. This cyanohydrin contributes to maintaining the bath stability until volatilization of the cyanohydrin, which improves the bath stability of the reduction-type gold plating solution.

The concentration of the iron cyanide compound in the plating solution is preferably 0.1 mg/L to 1000 mg/L, more preferably 1 mg/L to 100 mg/L. The concentration below the above lower limit may result in insufficient bath stability effects mentioned above. The concentration exceeding the above upper limit may decrease the deposition rate.

(Amine Compound)

The gold plating solution of the present disclosure may further include known additives of various kinds to be added to the reduction-type gold plating solution, as necessary. Examples of the additives include an amine compound.

The amine compound is used for promoting deposition of gold when a plating process is performed using the gold plating solution of the present disclosure. Examples of the amine compound include amine compounds represented by the following general formula (1) or (2).

[Chemical 1]

$$R_1\text{-NH-}C_2H_4\text{-NH-}R_2 \qquad (1)$$

[Chemical 2]

$$R_3\text{-}(CH_2\text{-}NH\text{-}C_2H_4\text{-}NH\text{-}CH_2)_n\text{-}R_4 \qquad (2)$$

In the general formula (1) and the general formula (2), $R_1$, $R_2$, $R_3$, and $R_4$ indicate -OH, -CH$_3$, -CH$_2$OH, -C$_2$H$_4$OH, -CH$_2$N(CH$_3$)$_2$, -CH$_2$NH(CH$_2$OH), -CH$_2$NH(C$_2$H$_4$OH),-C$_2$H$_4$NH(CH$_2$OH), -C$_2$H$_4$NH(C$_2$H$_4$OH), -CH$_2$N(CH$_2$OH)$_2$, -CH$_2$N(C$_2$H$_4$OH)$_2$,-C$_2$H$_4$N(CH$_2$OH)$_2$, or -C$_2$H$_4$N(C$_2$H$_4$OH)$_2$, which may be the same or different, and n is an integer from 1 to 4.

The concentration of the amine compound in the plating solution is preferably 0.01 g/L to 500 g/L, more preferably 0.1 g/L to 200 g/L. The concentration below the above lower limit may decrease the deposition rate. The concentration exceeding the above upper limit may cause the bath to be unstable.

(Chelate Compound)

The gold plating solution of the present disclosure does not contain a chelate compound having two or more coordinating groups of iminodiacetic acid type (iminodiacetic acid groups) or coordinating groups of aminomethylenephosphonic acid type (aminomethylenephosphonic acid groups).

More specifically, the gold plating solution of the present disclosure does not contain, for example, a chelate compound having two or more iminodiacetic acid groups, such as ethylene diamine tetraacetic acid, diethylenetriamine pentaacetic acid, triethylenetetraamine hexaacetic acid, 1,3-propanediaminetetraacetic acid, 1,3-diamino-2-propanol tetraacetic acid, glycol ether diaminetetraacetic acid, or a chelate compound having two or more aminomethylenephosphonic acid groups, such as ethylenediaminetetramethylene phosphonic acid.

This is because a chelate compound having two or more iminodiacetic acid groups or aminomethylenephosphonic acid groups, if contained in the gold plating solution, is more strongly complexed with iron ions than a chelating resin, described later, and therefore because it is difficult to remove the iron ions from the reduction-type gold plating solution.

For this reason, the gold plating solution of the present disclosure does not contain a chelate compound having two or more iminodiacetic acid groups or aminomethylenephosphonic acid groups, but may contain other chelate compounds (i.e., not having two or more iminodiacetic acid groups or aminomethylenephosphonic acid groups) such as nitrilotriacetic acid and nitrilotris(methylenephosphonic acid).

(pH)

It is preferable that pH of the gold plating solution of the present disclosure is in a range of 5 to 10. If the pH is less than 5, the plating rate may be insufficient, and if pH is greater than 10, the plating solution may be unstable.

The pH of the plating solution can be adjusted by a pH adjuster, such as sodium hydroxide, potassium hydroxide, ammonia water, tetramethyl ammonium hydroxide, sulfuric acid, hydrochloric acid, boric acid, phosphoric acid, monocarboxylic acid, and dicarboxylic acid.

(Temperature of Plating Solution)

The temperature of the plating solution is not particularly limited, but is preferably in a range of 50°C to 95°C. If the temperature of the plating solution is less than 50°C, a deposition rate is lowered, which results in a long plating process time and is not preferable. If the temperature of the plating solution is higher than 95°C, the deposition rate increases excessively, which produces coarse films and causes warping of the plating object due to thermal shrinkage of the plated films. This is not preferable.

(Plating Object)

The gold plating solution of the present disclosure is applicable to any kinds of plating objects, and is applicable to plating objects which have been treated with known gold plating (for example, circuits on printed circuit boards, mounting portions and terminal portions of IC packages, and the like).

<Regeneration Method for Plating Solution>

There has been a problem in a plating process using a reduction-type gold plating solution containing an iron cyanide compound, in which iron ions are generated from the iron cyanide compound and accumulates in the plating solution, resulting in a lower plating rate (lower deposition rate of the gold) due to the iron ions.

Given these circumstances, the inventors of the present disclosure have studied the above problem to find out that the iron ions included in the gold plating solution are removed from the gold plating solution by bringing a chelating resin having an iminodiacetic acid group or an aminomethylenephosphonic acid group into contact with the gold plating solution containing the iron ions, thereby making it possible to regenerate the gold plating solution.

A regeneration method for a gold plating solution of the present disclosure will be described below.

A chelating resin usable in the present disclosure is a chelating resin having an iminodiacetic acid group or a chelating resin having an aminomethylenephosphonic acid group.

Examples of a base material of the chelating resin include polystyrene resin, cellulose resin, epoxy resin, phenol resin, acrylic resin, resorcinol resin, vinyl chloride resin, polyvinyl alcohol resin, and so on. Shapes of these resins are not particularly limited, and include, for example, spherical, columnar, ring, saddle, honeycomb, and other shapes.

Examples of the base material of the chelating resin may also include fibers, such as natural, recycled, and semi-synthetic fibers, among which cellulose-based fibers, such as cotton, hemp, and pulp, are preferred.

A resin having a structure where an aminopolycarboxylic acid or oxo acid of phosphorus is chemically bonded to the base material is preferable. Examples of the aminopolycarboxylic acid include: ethylene diamine tetraacetic acid, hydroxyethyl ethylenediaminetriacetic acid, nitrilotriacetic acid, nitrilodiacetic acid, diethylenetriamine pentaacetic acid, triethylenetetramine hexacetic acid, dicarboxymethyl glutamic acid, hydroxyethyl iminodiacetic acid, propanediaminetetraacetic acid, diamino hydroxypropanetetraacetic acid, and so on. Examples of the oxo acid of phosphorus include those having a phosphonic acid group, a phosphate group, or a phosphinic acid group, and those having a phosphonic acid group or a phosphate group are particularly preferable.

The aminopolycarboxylic acid or the oxo acid of phosphorus may be bonded directly to the base material or bonded to the base material via a linking group. Examples of the linking group include -$CH_2$-, -NH-, -CO-, -O-, -S-, and -$SO_2$-. A plurality of linking groups connected to each other may also be used.

As the chelating resin of the present disclosure, a chelating resin which is a macroporous resin including a polystyrene resin as a base material and which has an iminodiacetic acid group or an aminomethylenephosphonic acid group as a functional group is usable.

Commercially available chelating resins can be used. For example, "SUMICHELATE MC700" (product name) manufactured by Sumika Chemtex Company, Limited is usable as the chelating resin which is a macroporous resin including a polystyrene resin as the base material and which has an iminodiacetic acid group as a functional group, and "DUOLITE C747UPS" (product name) manufactured by Sumika Chemtex Company, Limited is usable as the chelating resin which is a macroporous resin including a polystyrene resin as the base material and which has an aminomethylenephosphonic acid group as a functional group.

The chelating resin having the iminodiacetic acid group or the chelating resin having the aminomethylenephosphonic acid group is charged in a column, through which the gold plating solution is caused to pass by a pump or the like so as to make the gold plating solution come into contact with the chelating resins charged in the column and remove iron ions from the gold plating solution. The passing speed at this moment may be set appropriately according to the treatment capability of the chelating resins used, and is adjustable within a range of 0.2 $hr^{-1}$ to 50 $hr^{-1}$ as a space velocity (SV).

Alternatively, the chelating resin may be added directly to the gold plating solution and dispersed therein, and then may be removed by filtration. Examples of this technique include adding a chelating resin to an accumulated gold plating solution after the plating process, or transferring the gold plating solution used for the plating process to another container to bring the gold plating solution into contact with the chelating resin.

Alternatively, the chelating resin may be stored in a fibrous bag, which bag is immersed in a plating solution so as to bring the chelating resin and the gold plating solution in contact with each other.

The contact time between the gold plating solution and the chelating resin is not particularly limited. However, 3 minutes to 2000 minutes are preferred, and 5 minutes to 1000 minutes are more preferred, from the viewpoint of ensuring the removal of iron ions. From the same point of view, the amount of the chelating resin to be used is preferably 0.1 g/L to 100 g/L, more preferably 1 g/L to 50 g/L, with respect to one liter (1L) of the gold plating solution.

[EXAMPLES]

The following describes the present disclosure more specifically based on Examples and Comparative Examples. However, the present disclosure is not limited to the following Examples.

(Example 1)

<Preparation of Gold Plating Solution>

A gold plating bath of Example 1 was prepared by mixing and stirring a gold cyanide salt (potassium gold cyanide), a reducing agent, an amine compound, a chelate compound, and an iron cyanide compound at concentrations shown in Table 1. The pH of the plating bath was set to 7.0.

<Evaluation of Bath Stability>

Next, the gold plating solution was contained in a container, and the temperature of the gold plating solution was raised to 80°C. Then, the gold plating solution was maintained at this temperature for 10 hours. The condition of the gold plating solution was then visually observed whether there was deposition of gold on the container, which is a sign of the bath decomposition. The gold plating solution with no deposition of gold was evaluated as ○ (excellent stability), and the gold plating solution with deposition of gold was evaluated as x (poor stability). Table 1 shows the results of the foregoing.

<Calculation of Removal Rate of Iron Ions by Chelating Resin>

Next, the aforementioned gold plating solution maintained at 80°C for 10 hours was brought into contact with the chelating resin having an iminodiacetic acid group (product name: SUMICHELATE MC700, manufactured by Sumika Chemtex Company, Limited) and the chelating resin having an aminomethylenephosphonic acid group (product name: DUOLITE C747UPS, manufactured by Sumika Chemtex Company, Limited). More specifically, 10g of the granular chelating resin was added to one liter (1L) of the gold plating solution and dispersed with a stirrer for 120 minutes to bring the gold plating solution and the chelating resin into contact. The chelating resin was then removed from the gold plating solution by filtration, and the concentration of iron ions [mg/L] in the gold plating solution was measured using an atomic absorption spectrophotometer (product name: Z-5300, manufactured by Hitachi High-Tech Science Corporation) to obtain a removal rate of the iron ions in the gold plating solution using the following Equation (1). Table 1 shows the results of the foregoing.

[Equation 1]

$$\text{Removal rate of iron ions } [\%] = 100 - [(\text{Concentration of iron ions in gold plating solution after iron ion removal treatment by chelating resin } [\text{mg/L}])/(\text{Concentration of iron ions in gold plating solution before iron ion removal treatment by chelating resin } [\text{mg/L}])] \times 100$$

<Measurement of Deposition Rate>
First, pretreatment, electroless Ni plating, and electroless Pd plating were performed on a BGA substrate manufactured by C. Uyemura & Co., Ltd. to prepare a sample with an Ni/Pd plating film. Next, the plating deposition rate ($\mu$m/10 min) of the gold plating film formed on the sample after a plating process at 80°C for 10 minutes using the prepared gold plating bath was measured using an X-ray fluorescence thickness meter (product name: XDV-$\mu$ manufactured by FISCHER INSTRUMENTS K.K.). Table 1 shows the results of the foregoing.

(Examples 2 to 8 and Comparative Examples 1 to 5)

Gold plating solutions were prepared in the same manner as in the above Example 1, except that the compositions of the gold plating solutions were changed to the compositions shown in Tables 1 and 2.
The evaluation of the bath stability, calculation of the removal rate of the iron ions by the chelating resin, and measurement of the deposition rate were conducted in the same manner as in the above Example 1. Tables 1 and 2 show the results of the foregoing.
The gold plating solution of Comparative Example 4 does not contain an iron cyanide compound; therefore, the removal rate of the iron ions by the chelating resin was not calculated.

[Table 1]

| | | Example 1 | Example 2 | Example 3 | Example 4 | Example 5 | Example 6 | Example 7 | Example 8 |
|---|---|---|---|---|---|---|---|---|---|
| Gold Cyanide Salt | Potassium Gold Cyanide [g/L] | 2 | 2 | 2 | 2 | 2 | 2 | 2 | 2 |
| Reducing Agent | Formaldehyde [g/L] | 1 | 1 | - | 1 | 1 | 1 | 1 | 1 |
| | Hexamethylenetetramine (Formaldehyde Precursor) [g/L] | - | - | 1 | - | - | - | - | - |
| | Hydrazine [g/L] | - | - | - | - | - | - | - | - |
| Amine Compound | $C_2H_4OH$-NH-$C_2H_4$-NH-$C_2H_4OH$ [g/L] | 10 | 10 | 10 | - | - | 10 | - | 10 |
| | $C_2H_5$-NH-$C_2H_4$-NH-$C_2H_4OH$ [g/L] | - | - | - | 10 | - | - | - | - |
| | $(CH_3)_2NC_2H_4$-NH-$C_2H_4$-NH-$C_2H_4N(CH_3)_2$ [g/L] | - | - | - | - | 10 | - | 10 | - |
| Chelate Compound | Nitrilotriacetic Acid [g/L] | 10 | 10 | 10 | 10 | 10 | - | 10 | 10 |
| | Nitrilotris(methylenephosphonic acid) [g/L] | - | - | - | - | - | 10 | - | - |
| | Ethylene Diamine Tetraacetic Acid [g/L] | - | - | - | - | - | - | - | - |
| | Ethylenediaminetetramethylene Phosphonic Acid [g/L] | - | - | - | - | - | - | - | - |
| Iron Cyanide Compound | Potassium Ferrocyanide (as Iron) [mg/L] | 10 | - | 10 | 10 | 10 | 10 | - | - |
| | Potassium Ferricyanide (as Iron) [mg/L] | - | 10 | - | - | - | - | - | - |
| | Sodium Pentacyanoammineferrate (II) [mg/L] | - | - | - | - | - | - | 10 | - |
| | Sodium Pentacyanonitrosylferrate (III) [mg/L] | - | - | - | - | - | - | - | 10 |
| pH | | 7.0 | 7.0 | 7.0 | 7.0 | 7.0 | 7.0 | 7.0 | 7.0 |
| Bath Stability (80°C, after 10 hours) | | ○ | ○ | ○ | ○ | ○ | ○ | ○ | ○ |

(continued)

| | Example 1 | Example 2 | Example 3 | Example 4 | Example 5 | Example 6 | Example 7 | Example 8 |
|---|---|---|---|---|---|---|---|---|
| Iron Ion Removal Rate by Chelating Resin Having Iminodiacetic Acid Group [%] | 85 | 87 | 87 | 90 | 89 | 91 | 85 | 85 |
| Iron Ion Removal Rate by Chelating Resin Having Aminomethylenephosphonic Acid Group [%] | 91 | 90 | 90 | 90 | 90 | 93 | 88 | 90 |
| Deposition Rate [μm/10 min] | 0.10 | 0.11 | 0.11 | 0.10 | 0.11 | 0.11 | 0.11 | 0.10 |

[Table 2]

| | | Comparative Example 1 | Comparative Example 2 | Comparative Example 3 | Comparative Example 4 | Comparative Example 5 |
|---|---|---|---|---|---|---|
| Gold Cyanide Salt | Potassium Gold Cyanide [g/L] | 2 | 2 | 2 | 2 | 2 |
| Reducing Agent | Formaldehyde [g/L] | - | 1 | 1 | 1 | - |
| | Hexamethylenetetramine (Formaldehyde Precursor) [g/L] | - | - | - | - | - |
| | Hydrazine [g/L] | 1 | - | - | - | - |
| Amine Compound | $C_2H_4OH$-$NH$-$C_2H_4$-$NH$-$C_2H_4OH$ [g/L] | 10 | 10 | 10 | 10 | 10 |
| | $C_2H_5$-$NH$-$C_2H_4$-$NH$-$C_2H_4OH$ [g/L] | - | - | - | - | - |
| | $(CH_3)_2NC_2H_4$-$NH$-$C_2H_4$-$NH$-$C_2H_4N(CH_3)_2$ [g/L] | - | - | - | - | - |
| Chelate Compound | Nitrilotriacetic Acid [g/L] | 10 | - | - | 10 | 10 |
| | Nitrilotris(methylenephosphonic acid) [g/L] | - | - | - | - | - |
| | Ethylene Diamine Tetraacetic Acid [g/L] | - | 10 | - | - | - |
| | Ethylenediaminetetramethylene Phosphonic Acid [g/L] | - | - | 10 | - | - |
| Iron Cyanide Compound | Potassium Ferrocyanide (as Iron) [mg/L] | 10 | 10 | 10 | - | 10 |
| | Potassium Ferricyanide (as Iron) [mg/L] | - | - | - | - | - |
| Citric Acid [g/L] | | - | - | - | - | 110 |
| Nickel [mg/L] | | - | - | - | - | 10 |
| Cobalt [mg/L] | | - | - | - | - | 10 |
| pH | | 7.0 | 7.0 | 7.0 | 7.0 | 4.2 |
| Bath Stability (80°C, after 10 hours) | | × | ○ | ○ | × | ○ |
| Iron Ion Removal Rate by Chelating Resin Having Iminodiacetic Acid Group [%] | | 5 | 1 | 1 | Not Calculated | 1 |
| Iron Ion Removal Rate by Chelating Resin Having Aminomethylenephosphonic Acid Group [%] | | 10 | 3 | 3 | Not Calculated | 2 |
| Deposition Rate [$\mu$m/10 min] | | 0.06 | 0.10 | 0.10 | 0.11 | 0.01 |

EP 4 206 357 A1

As shown in Table 1, in Examples 1 to 8, iron ions included in the respective gold plating solutions are removed efficiently from the gold plating solution by bringing the gold plating solution into contact with the chelating resin having an iminodiacetic acid group or an aminomethylenephosphonic acid group.

Further, the gold plating solutions of Examples 1 to 8 contain formaldehyde or its precursor as a reducing agent; therefore, addition of an iron cyanide compound to the gold plating solution generates cyanohydrin, which is generated by the reaction between formaldehyde or its precursor and cyanide ions released from the iron cyanide compound. This cyanohydrin contributes to maintaining the bath stability, making the gold plating solution have excellent bath stability.

On the other hand, as shown in Table 2, the gold plating solution of Comparative Example 1 contains hydrazine as a reducing agent of the gold plating solution, and does not contain formaldehyde or its precursor; therefore, no cyanohydrin is generated by the reaction between cyanide ions released from the iron cyanide compound and formaldehyde or its precursor. Thus, bath decomposition of the gold plating solution occurs, making the gold plating solution have poor bath stability.

The gold plating solutions of Comparative Examples 1 and 5 do not contain formaldehyde or its precursor; therefore, no reaction occurs between cyanide ions released from the iron cyanide compound and formaldehyde or its precursor, and the cyanide ions released from the iron cyanide compound is kept at a constant concentration in the gold plating solution. Thus, another cyanide ion is less likely to be released from the iron cyanide compound, which means less iron ions that can be removed by the chelating resin are generated. As a result, the removal rate of the iron ions is low.

The gold plating solutions of Comparative Examples 2 and 3 contain, as a chelate compound, a chelate compound having two or more iminodiacetic acid groups or aminomethylenephosphonic acid groups (e.g., ethylene diamine tetraacetic acid and ethylenediaminetetramethylene phosphonic acid), which is more strongly complexed with iron ions than a chelating resin, and it is therefore difficult to remove the iron ions from gold plating solution. As a result, the removal rates of the iron ions are low.

The gold plating solution of Comparative Example 4 does not contain an iron cyanide compound; therefore, no cyanohydrin is generated by the reaction between cyanide ions released from the iron cyanide compound and formaldehyde or its precursor. Thus, bath decomposition of the gold plating solution occurs, making the gold plating solution have poor bath stability.

Comparative Example 5 is a bath not containing a reducing agent; therefore, the deposition rate is low.

A regeneration method for a gold plating solution according to the present disclosure is advantageously used for a gold plating solution used in forming, in particular, circuits on printed circuit boards and mounting portions and terminal portions of IC packages.

**Claims**

1. A regeneration method for a gold plating solution, the method comprising:
   bringing a gold plating solution containing a gold cyanide salt, a reducing agent that is formaldehyde or its precursor, and an iron cyanide compound, and not containing a chelate compound having two or more iminodiacetic acid groups or aminomethylenephosphonic acid groups, into contact with a chelating resin having an iminodiacetic acid group or an aminomethylenephosphonic acid group, thereby removing iron ions from the gold plating solution.

2. The regeneration method of claim 1, wherein
   the chelating resin is a resin containing a polystyrene resin as a base material, the chelating resin having the iminodiacetic acid group or the aminomethylenephosphonic acid group as a functional group.

3. The regeneration method of claim 1 or 2, wherein

   the gold plating solution contains an amine compound expressed by a general formula (1) or a general formula (2) shown below: [Chemical 1]

$$R_1\text{-NH-}C_2H_4\text{-NH-}R_2 \qquad (1)$$

   [Chemical 2]

$$R_3\text{-}(CH_2\text{-NH-}C_2H_4\text{-NH-}CH_2)_n\text{-}R_4 \qquad (2)$$

   where in the general formula (1) and the general formula (2), $R_1$, $R_2$, $R_3$, and $R_4$ indicate -OH, -CH$_3$, -CH$_2$OH, -C$_2$H$_4$OH, -CH$_2$N(CH$_3$)$_2$, -CH$_2$NH(CH$_2$OH), -CH$_2$NH(C$_2$H$_4$OH),-C$_2$H$_4$NH(CH$_2$OH), -C$_2$H$_4$NH(C$_2$H$_4$OH), -CH$_2$N(CH$_2$OH)$_2$, -CH$_2$N(C$_2$H$_4$OH)$_2$,-C$_2$H$_4$N(CH$_2$OH)$_2$, or -C$_2$H$_4$N(C$_2$H$_4$OH)$_2$, which is same or different, and n is an integer from 1 to 4.

4. The regeneration method of any one of claims 1 to 3, wherein
the iron cyanide compound is at least one kind selected from the group consisting of pentacyanonitrosyl iron(III) acid or its salt (i.e., pentacyanonitrosylferrate(III)); pentacyanoammine iron(II) acid or its salt (i.e., pentacyanoammineferrate(II)); hexacyanido iron(II) acid or its salt (i.e., hexacyanidoferrate(II)); and hexacyanido iron(III) acid or its salt (i.e., hexacyanidoferrate(III)).

5. The regeneration method of claim 4, wherein
the iron cyanide compound is at least one of potassium ferrocyanide or potassium ferricyanide.

Europäisches
Patentamt

European
Patent Office

Office européen
des brevets

# EUROPEAN SEARCH REPORT

Application Number

EP 22 21 3492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 309400 A (NIPPON KOJUNDO KAGAKU KK) 23 October 2002 (2002-10-23) | 1,2 | INV. C23C18/16 C23C18/44 |
| Y | * paragraph [0021] * <br> * paragraph [0032] * <br> * paragraph [0034] - paragraph [0035] * <br> * paragraph [0043] * <br> * paragraph [0047] * <br> ----- | 3-5 | |
| Y | EP 0 343 816 A1 (ENGELHARD CORP [US]) 29 November 1989 (1989-11-29) <br> * page 3, line 25 - page 4, line 3 * <br> ----- | 4,5 | |
| Y | JP 2008 169425 A (UYEMURA C & CO LTD) 24 July 2008 (2008-07-24) <br> * paragraph [0010] - paragraph [0012] * <br> ----- | 3 | |
| A | US 3 505 217 A (MORICO JOHN L) 7 April 1970 (1970-04-07) <br> * abstract * <br> * column 6, lines 22-42 * <br> ----- | 1-5 | |

TECHNICAL FIELDS
SEARCHED (IPC)

C23C
C02F

The present search report has been drawn up for all claims

| Place of search | Date of completion of the search | Examiner |
|---|---|---|
| The Hague | 16 May 2023 | Telias, Gabriela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 3492

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2023

| Patent document cited in search report | | Publication date | Patent family member(s) | | Publication date |
|---|---|---|---|---|---|
| JP 2002309400 | A | 23-10-2002 | JP | 3842063 B2 | 08-11-2006 |
| | | | JP | 2002309400 A | 23-10-2002 |
| EP 0343816 | A1 | 29-11-1989 | EP | 0343816 A1 | 29-11-1989 |
| | | | JP | H0219473 A | 23-01-1990 |
| | | | KR | 890017391 A | 16-12-1989 |
| JP 2008169425 | A | 24-07-2008 | CN | 101275224 A | 01-10-2008 |
| | | | JP | 4941650 B2 | 30-05-2012 |
| | | | JP | 2008169425 A | 24-07-2008 |
| | | | KR | 20080066570 A | 16-07-2008 |
| | | | TW | 200842203 A | 01-11-2008 |
| US 3505217 | A | 07-04-1970 | NONE | | |

EPO FORM P0459

For more details about this annex : see Official Journal of the European Patent Office, No. 12/82

**EP 4 206 357 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3842063 B

- JP 6795821 B